# EUROPEAN PATENT SPECIFICATION

(11) **EP 2 833 595 B1**
(45) Date of publication and mention of the grant of the patent: **31.10.2018**
(21) Application number: 13306103.6
(22) Date of filing: 31.07.2013
(51) Int. Cl.: H04L 29/06, H04L 29/08

(54) **MULTIMEDIA STREAMS IN WEB APPLICATIONS**
MULTIMEDIA-STREAMS IN WEBANWENDUNGEN
FLUX MULTIMÉDIA DANS DES APPLICATIONS WEB

(43) Date of publication of application: 04.02.2015
(73) Proprietor: Alcatel Lucent, 91620 Nozay (FR)
(72) Inventor: Verdot, Vincent, 91640 Fontenay-Lès-Briis (FR); Bouché, Nicolas, 75013 Paris (FR)
(74) Representative: Nokia Bell Patent Attorneys

(56) References cited:
- US-A1- 2002 047 899
- US-A1- 2005 228 861
- US-A1- 2006 031 548
- US-A1- 2007 198 532
- ED O'LEARY ET AL: "WebRTC Overview", 3GPP DRAFT; WEBRTC OVERVIEW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Chicago; 20130416 - 20130418 9 April 2013 (2013-04-09), XP050710073, Retrieved from the Internet: URL:http://www.3gpp.org/ftp/tsg_sa/WG3_Sec urity/TSGS3_LI/2013_49_Chicago/ [retrieved on 2013-04-09]
- PERKINS UNIVERSITY OF GLASGOW M WESTERLUND ERICSSON J OTT AALTO UNIVERSITY C: "Web Real-Time Communication (WebRTC): Media Transport and Use of RTP; draft-ietf-rtcweb-rtp-usage-03.txt", WEB REAL-TIME COMMUNICATION (WEBRTC): MEDIA TRANSPORT AND USE OF RTP; DRAFT-IETF-RTCWEB-RTP-USAGE-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 5 June 2012 (2012-06-05), pages 1-61, XP015083160, [retrieved on 2012-06-05]
- FERNANDEZ LUIS LOPEZ ET AL: "Kurento: a media server technology for convergent WWW/mobile real-time multimedia communications supporting WebRTC", 2013 IEEE 14TH INTERNATIONAL SYMPOSIUM ON A WORLD OF WIRELESS, MOBILE AND MULTIMEDIA NETWORKS (WOWMOM), IEEE, 4 June 2013 (2013-06-04), pages 1-6, XP032478074, DOI: 10.1109/WOWMOM.2013.6583507 ISBN: 978-1-4673-5827-9 [retrieved on 2013-08-20]

## Description

### Technical Field

The invention relates to integrating real-time multimedia streams in a Web application.

### Background

Integrating real-time multimedia streams in a native Web application, i.e. within a Web browser and without any external (proprietary) plug-ins, has been made possible by the WebRTC technology currently being normalized by W3C and IETF (http://www.webrtc.org/). The WebRTC technology implements a one-to-one real-time communication (from one web browser to another), so negotiation mechanisms are assured in a dedicated (proprietary) control plane which connects the two clients (e.g. WebSocket, HTTP, SIP, etc.), and data-level mechanisms are assured through a dedicated (standard) WebRTC "Peer Connection". Thereby, in the WebRTC technology, the communication is created and managed via a pair Websocket/Peerconnection.

A drawback of the WebRTC technology is that realizing more complex scenarios than one-to-one communication (e.g. visio-conference, live multi-streams, etc) requires to create and manage, at the client side, a pair Websocket/Peerconnection for every source of destination. Besides the fact that this is not efficient and not transparent, it is also not scalable (meaning that it will fail when a lot of connections are to be made). WebRTC is discussed in the prior-art documents XP050710073, which is a 3GPP Draft titled: "WebRTC Overview", and in XP015083160, which is an IETF draft titled "Web Real-Time Communication (WebRTC): Media Transport and Use of RTP". Document US2002047899 discloses a solution for preprocessing content for a stream caching server in an interactive information distribution system. Document US2007198532 discloses a solution that allow users of a community website to share media content with other users of the website in a controlled manner. Document US2005228861 discloses a solution to efficiently realize automatic creation of a minute file of a network conference system.

When the WebRTC technology is used to achieve multi-stream real-time communication on Web, all connections are to be managed on each web application. E.g., a user involved in a video-conference with 3 other clients will initiate, through his Web application, 3 WebRTC connections (WebSocket + Peer Connection) to send his streams (e.g. audio + video). This approach suffers 3 majors drawbacks, explained hereunder.

The first drawback is that the multi-stream aspect must be directly handled by the Web client applications (no abstraction of network capabilities at the application level) - more complex.

The second drawback is that the sending Web client application will consume much more bandwidth as it has to send the same content to every corresponding peer (no "multicast"-principle). Moreover, streams adaptations (codec, throughput, size, etc) will have a huge negative performance impact on the sending device which may not afford it when faced to multiple peers - non scalable approach.

The third drawback is that the receiving Web client applications must handle real-time stream transfer (and other stream manipulations) by handling multiple streams at the same time which could be limited by the available bandwidth and so cannot be transparent/seamless - no efficient real-time handling.

Some other mechanisms are known in the prior art to enable multi-stream real-time communications, for example legacy Web media application frameworks, which enable advanced multimedia functions in the Web browser thanks to proprietary plug-ins such as Microsoft Silverlight or Adobe Flash. A substantial drawback of these solutions is that they require the end-user to manually install and update a specific application on the device (painful and not available for all devices and operating systems). A further drawback is that these solutions emerged because Web standards were missing essential multimedia functions for browsers. With new standard technologies such as HTML5 or WebRTC, the use of legacy proprietary solutions for Rich Internet Applications is most likely to decline and eventually disappear.

Some other mechanisms are known in the prior art to enable multi-stream real-time communications, for example WebRTC-based servers which provide multi-peer control mechanisms such as talky.io, XSocket.NET or Google's peerConnectionServer library. However these solutions only implement the higher-layer control functions (RDV server, registrar, etc) and so do not handle the media distribution (no bandwidth optimization, no switching or transcoding, etc) .

Some other mechanisms are known in the prior art to enable multi-stream real-time communications, for example several solutions of MCU (Multipoint Controller Unit) servers are compatible with WebRTC, such as conf-call.org or Medooze. These solutions, based on SIP as control protocol but also offering HTTP/WebSocket interfaces, handle the media streams including the transcoding and distribution mechanisms. Nevertheless it is not possible to seamlessly switch from a stream to another or more generally to realize complex manipulations on the media because of multiple reasons explained hereunder.

A first reason is that the control layer is tightly coupled to the SIP protocol (possibly encapsulated in WebSocket) and so cannot be extended to exotic functions not supported by legacy SIP agents (such as the stream switch, resize, dynamic transcoding, etc).

A second reason is that any operation on real-time streams will negatively impact the Web application as it will cause the corresponding WebRTC PeerConnection to be reset (closed and then re-opened), creating a delay in the media reception.

A third reason is that the output of these MCU is usually a rendered view of all incoming streams (merge/mix of video streams), there is neither adaptation nor personalization of the content which is produced for a specific purpose (here video-conferencing service) and the Web application cannot control what is published and/or consumed. The technical reason is that, for simplicity, the software deployment on servers is dedicated to a given application. Thus, current protocols and infrastructures for communication SIP/IMS for instance, only provide communication functions. As an example, the mixing of streams (using transparency) is not required and so was not included in the specification and design of the related protocols and clients. Seamless stream switching (changing source) is also rarely used in standard communication and so the corresponding issues are not addressed by current implementations of MCU.

It is an object of the present invention to provide a server and a method for efficient and flexible streaming in a native Web application, i.e. within a web browser and without any external (proprietary) plug-ins. The invention is defined by the apparatus of claim 1 and the method of claim 7. Further details are defined in the dependent claims.

### Summary

To this end, the invention provides in a network component comprising:
- at least one input interface adapted for receiving a respective media stream from a respective web client application;
- at least one output interface adapted for transmitting a respective requested media stream to a respective further web client application;
- a stream manager adapted for storing information about media streams;
- a controller connected to the at least one input interface and to the at least one output interface, the controller being adapted to register incoming streams, received via the at least one input interface, in the stream manager, and adapted to register requested media streams, requested via the at least one output interface, in the stream manager;
- a processor connected to the stream manager, to the at least one input interface and to the at least one output interface and adapted for transferring a registered incoming stream from an input interface to an output interface requesting the registered incoming stream.

By having at least one input interface, at least one output interface and a processor in between, the network component of the invention can communicate to the web client application (providing the stream) as a receiver, and can communicate to the further web client application (receiving the stream) as a stream-provider. Thereby, the communication between the web client application providing the stream and the network component can be optimized independently from the communication between the network component and the further web client application receiving the stream. Furthermore, the processor is adapted to transfer the incoming stream to one or more requestors, thereby enabling efficient and flexible streaming in a native Web application.

Preferably, the network component is a WebRTC Media Server. Thereby preferably, the input interface and the output interface are formed as WebRTC Agents. By adapting the network component so that it complies with the WebRTC standards, communication with existing web applications is easy and does not require dedicated software to be installed.

Preferably, the processor cooperates with a decoder provided for decoding an incoming media stream. By decoding incoming media streams by the network element, the media stream can be recompiled or encoded according to the requests and particulars of the receiving web client application.

Preferably, the processor cooperates with an encoder for encoding a transmitted media stream. By encoding the media stream, the web client application can receive the media stream according to its requests and particulars.

Preferably, every media stream is established via a combination of a peer connection and a WebSocket. Thereby independent platforms are assigned to data-level mechanisms and negotiation mechanisms.

Preferably, every media stream comprises at least an audio and a video section. Audio and video streams are widely used for broadcasting, video-conferencing and other applications.

Preferably, the processor is adapted for real-time resizing of the transferred media stream. By encoding the media stream, the web client application can receive the media stream according to its requests and particulars.

The invention further relates to a method for establishing a media stream between a first web client application and a second web client application via a network component of any one of the previous claims, wherein the method comprises the steps of:
- establishing a connection between the first web client application and the network component;
- publishing media stream information at the network component by the first web client application;
- establishing a media stream, corresponding to the media stream information, from the first web client application to the network component;
- establishing a further connection between the second web client application and the network component;
- requesting to consume said media stream by the second web client application to the network component; and
- transmitting said media stream from said network component to said second web client application.

Effects and application of the method is similar and analogue to the effects and application of the above-described network component. Therefore regarding effects, reference is made to the explanation above.

Preferably, the network element is a WebRTC media server and wherein the first web client application and the second web client application are WebRTC agents.

Preferably, the network element comprises a processor, and wherein the method further comprises, in the network element, at least one of the steps of:
- decoding the transferred media stream;
- encoding the transferred media stream; and
- resizing the transferred media stream.

### Brief description of the figures

Some embodiments of apparatus and/or methods in accordance with embodiments of the present invention are now described, by way of example only, and with reference to the accompanying drawings, in which:
figure 1 illustrates a more complex real-time multimedia stream according to the prior art;
figure 2 illustrates the multimedia stream of figure 1 according to an embodiment of the invention;
figure 3 illustrates a network component according to an embodiment of the invention; and
figure 4 illustrates a method for establishing a media stream according to an embodiment of the invention.

### Detailed description of embodiments

The invention proposes to create a WebRTC Media Server which will transparently manage the distribution multiple streams between Web client applications, including transcoding, resizing and transfer functions to abstract and lighten end-user browser/devices. This server will play the role of intermediary between WebRTC peers willing to communicate, so it will offer standard WebRTC connection interfaces (WebSocket/HTTP + PeerConnection), with additional controls such as:
- "publish": enabling a Web client application to send and make available a real-time stream (arbitrarily named). The web client application is connected to the media server via an input interface. Via the 'publish' mechanism, an incoming stream received via the input interface can be registered by the server. In the server, registrations are collected in a stream manager (database).
- "consume": to receive a specific stream (given its name). Further (receiving) web client applications are connected to the media server via an output interface. The 'consume' mechanism allows these web client applications to indicate the streams that they are interested in. These streams are registered by the server (in the stream manager). The server can, based on the registrations made via the publish and consume mechanism, transmit a stream from a first web client application to a second web client application.
- other commands to switch from a stream to another within a single WebRTC PeerConnection, transcode, resize, etc.

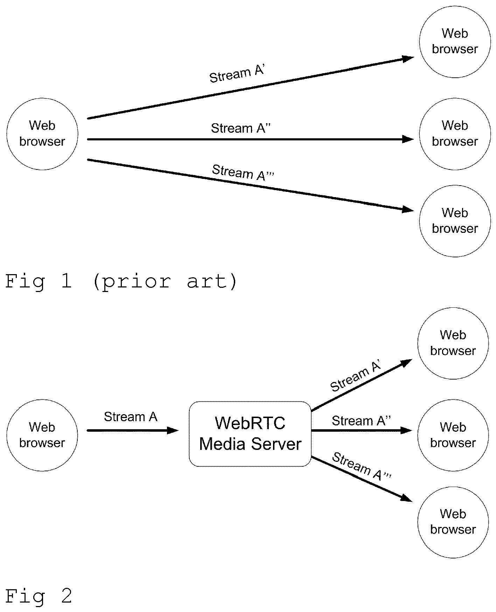

Where prior art streams between web client application are always individually managed by the web client applications (as is shown in figure 1), the invention allows to distribute the streams in a significantly more efficient manner (as is shown in figure 2). Thereby the invention provides a solution for new needs that recently emerged from end-users and application developers who naturally want to manipulate Web-based real-time streams like they do in the telecommunication domain: session transfer, seamless continuity, one-to-many communication, etc.

The present invention proposes a single network component, the **WebRTC Media Server,** which plays the role of intermediary between all WebRTC-enabled browsers willing to communicate. Fig. 2 shows such a configuration. Thus, it reduces bandwidth and computing consumption on sender's device (cf. Fig. 1 vs. Fig. 2) making one-to-many real-time communication scalable whatever the number of receivers.

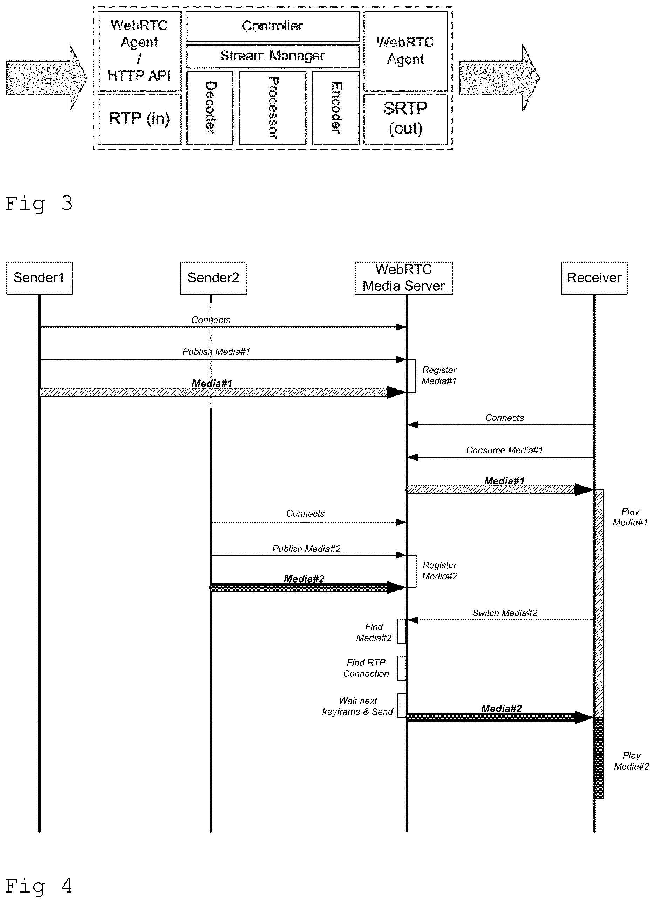

Figure 3 shows a functional overview of the WebRTC Media Server, its main components are:
- **A WebRTC Agent** forms the entry point for Web browsers (supported as standard). The WebRTC Agent functions as an input and output interface adapted for connecting to a web client application and for receiving/transmitting a media stream from/to the latter. It ensures the negotiation and the control of media sessions between the client and the server. It may receive and send control messages regarding the underlying data plane (RTP/SRTP interface) e.g. SDP stream negotiation, "publish", "consume", ... For compatibility purpose, this input interface could also support additional session control protocols through SIP (IMS), WebSocket, REST API, etc. The requests are handled by the agent and eventually dispatched to the **Controller** and **Stream Manager** for server-specific orders.
- **The data interface (RTP (in)** / **SRTP (out))** receives RTP streams from WebRTC Web client applications and forward the appropriate information to the **Controller.** Thereby, the data interface is part of the input interface of the media server. If necessary, the data stream is sent to the **Decoder** for additional processing, otherwise it can be directly transferred to the corresponding outgoing SRTP sockets (indicated by the **Stream Manager** which stores registered receivers).
- **The Controller** handles specific requests from Web clients: "publish" that indicates a new incoming stream to be registered (associated to a name) and "consume" that expresses the will to *play* an available (previously published) stream. If supported by the server (i.e. implemented and supported by available resources), additional features could be handled such as transcoding, resizing, transfer, etc.
- **The Stream Manager** stores information about published and consumed streams. It helps the **Controller** in making decisions on stream processing (e.g. transcode, resize, transfer) and stream distribution.
- **The Decoder, Encoder and Processing** modules are used when stream data manipulation is required. It enables the WebRTC Media Server to directly access the content (low-level) to dynamically modify it in real-time prior to be forwarded to a specific WebRTC Web client application (through the **RTP out**). Typical operations are transcoding (encoding change), resizing/reshaping (dimension/bandwidth change), etc.
- For output, another **WebRTC Agent** and **SRTP** module function as an output interface, ensure communication and negotiation with destination Web client applications.

The WebRTC Media Server allows Web client applications to consume multi-streams and one-to-many real-time communications. Therefore the way the data streams are distributed is optimized. On the client-side, every stream requires a Peer Connection (for data) and a WebSocket (for control). However establishing a Peer Connection is a long process (a matter of seconds) which is not acceptable for real-time multimedia applications. The WebRTC Media Server is designed to address this specific issue by making persistent the data-level interfaces. Thus, it is possible to keep the existing RTP sockets while operating on the content (e.g. transcoding, resizing/reshaping and transfering). So, the WebRTC connection is not lost while various operations are seamlessly applied to the media streams. Figure 4 depicts an example of *publish*, *consume* and seamless stream *transfer*/*switch* (call-flow). It's a matter of data switching on server-side. Figures 3 and 4 show the involved components and how they interact. The idea is merely to, instead of closing and re-opening a new connection like it occurs during a RE-INVITE request using the SIP protocol (and causing the data connection to be dropped), the switching is not achieved by the client but by the server which reuses established connections, updating the data source.

The benefit of the invention is to guarantee efficient real-time media content distribution over standard Web protocols (one-to-many media publishing). Thereby the main advantage is its scalability. Even with a great number of simultaneous streams, it remains possible to distribute content in real-time without extra cost for the client application (in terms of bandwidth, CPU & Memory). Multi-stream handling (publish, consume, switch, adapt, etc) is transparent for the end-devices which remain basic Web browsers.

The switching of media streams (relying on existing Web technologies for transport and control) and other 'exotic functions' are made possible because the present invention is decoupled from the SIP protocol (contrarily to existing solutions which need interconnecting legacy infrastructures with Web). Exotic functions are mechanisms not natively supported by plain SIP/IMS agents, typically dynamic multi-stream adaptation, seamless switching, combining streams using transparent masks, etc. Resetting a connection is not necessary since the WebRTC PeerConnection established between the Web client and the server remains the same. Only the content is dynamically changed on the server side. This server-side data switching is one of the distinguishing parts of the present invention, depicted in figures 3 & 4.

When a multimedia stream is to be created between a first web client application (first browser) and a second web client application (second browser), each of the first and second web client applications establish a connection with the web server of the invention. Thereby, the established connection between the server and the first and second web client application meets the WebRTC standards. Thereby, the web client applications can operate as if directly communicating with another web client application. The first web client application published a stream named 'A' while the second web client application requests (via the 'consume' mechanism) a stream named 'A'. The published and requested stream named 'A' is registered in the stream manager. The controller of the server scans the stream manager and recognizes that the second web client application requests a stream that is published by the first web client application. As a result, the controller transmits the stream 'A' to the second web client application. Should the second web client application, after some time, request another stream, the connection between the second web client application and the server should not be changed or restarted, and the controller can simply transmit the other stream (if available) to the second web client application.

Thereby the controller, transmitting the stream, is preferably configured to decode and encode the stream, whereby further stream adaptations can be inserted in the transmission (such as resizing). This allows an optimal transmission of the stream, depending on the network conditions and on the requests made by the second web client application.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. WebRTC Media Server comprising:
- at least one input interface formed as WebRTC Agent and adapted for receiving, via a WebRTC connection, a respective media stream from a respective web client application that is a first WebRTC agent;
- at least one output interface formed as WebRTC Agent and adapted for transmitting, via a further WebRTC connection, a respective requested media stream to a respective further web client application that is a second WebRTC agent; **characterized in that** the WebRTC Media server further comprises:
- a stream manager adapted for storing information about media streams, wherein media streams are real-time multi-media streams;
- a controller connected to the at least one input interface and to the at least one output interface, the controller being adapted to register incoming streams, received via the at least one input interface, in the stream manager, and adapted to register requests to consume media streams, requested via the at least one output interface, in the stream manager;
- a processor connected to the stream manager, to the at least one input interface and to the at least one output interface and adapted for transferring a registered incoming stream from the input interface to the output interface requesting to consume the registered incoming stream.

2. WebRTC Media Server according to any one of the previous claims, wherein the processor cooperates with a decoder provided for decoding an incoming media stream.

3. WebRTC Media Server according to any one of the previous claims, wherein the processor cooperates with an encoder for encoding a transmitted media stream.

4. WebRTC Media Server according to any one of the previous claims, wherein every media stream is established via a combination of a peer connection and a WebSocket.

5. WebRTC Media Server according to any one of the previous claims, wherein every media stream comprises at least an audio and a video section.

6. WebRTC Media Server according to any one of the previous claims, wherein the processor is adapted for real-time resizing of the transferred media stream.

7. Method for establishing a media stream between a first WebRTC agents and a second WebRTC agents via a WebRTC media server of any one of the previous claims, wherein the method comprises the steps of:
- establishing a WebRTC connection between the first WebRTC agents and the WebRTC media server;
**characterized in that** the method further comprises:
- the first WebRTC agents publishing media stream by registering the media stream information at the WebRTC media server;
- establishing a media stream, corresponding to the media stream information, from the first WebRTC agents to the WebRTC media server, wherein the media stream is a real-time multi-media stream;
- establishing a further WebRTC connection between the second WebRTC agents and the WebRTC media server;
- the second WebRTC agents requesting to consume said registered media stream to the WebRTC media server; and
- transmitting said registered media stream from said WebRTC media server to said second WebRTC agents .

8. Method according to claim 7 wherein the WebRTC media servercomprises a processor, and wherein the method further comprises, in the WebRTC media server, at least one of the steps of:
- decoding the transferred media stream;
- encoding the transferred media stream; and
- resizing the transferred media stream.

9. Method according to any one of the claims 7-8 wherein the step of publishing comprises storing in a stream manager said media stream information.

10. Method according to any one of the claims 7-9, wherein the step of requesting to consume comprises storing in a stream manager information relating to the requested media stream.

11. Method according to any one of the claims 7-10, wherein the step of transmitting comprises checking a stream manager for a requested stream that matches with a published stream, and transmitting the published stream to the second WebRTC agents requesting the stream.

## Patentansprüche

1. WebRTC Medienserver, umfassend:
- mindestens eine Eingangsschnittstelle ist als WebRTC Agent ausgebildet und ausgelegt zum Empfangen, über eine WebRTC Verbindung, eines entsprechenden Medienstroms von einer entsprechenden Web-Client-Anwendung, die ein erster WebRTC Agent ist;
- mindestens eine Ausgangsschnittstelle ist als WebRTC Agent ausgebildet und ausgelegt zum Übertragen, über eine weitere WebRTC Verbindung, eines entsprechenden angeforderten Medienstroms auf eine entsprechende weitere Web-Client-Anwendung, die ein zweiter WebRTC Agent ist;
**dadurch gekennzeichnet, dass** der WebRTC Medienserver weiterhin umfasst:
- einen Stream-Manager, der ausgelegt ist zum Speichern von Information über Medienströme, wobei die Medienströme Echtzeit-Multimediaströme sind;
- einen Controller, der verbunden ist mit der mindestens einen Eingangsschnittstelle und mit der mindestens einen Ausgangsschnittstelle, wobei der Controller ausgelegt ist zum Registrieren eingehender Ströme, die empfangen werden über die mindestens eine Eingangsschnittstelle, in dem Stream-Manager, und ausgelegt ist zum Registrieren von Anforderungen für den Konsum von Medienströmen, angefordert über die mindestens eine Ausgangsschnittstelle, in dem Stream-Manager;
- einen Prozessor, der mit dem Stream-Manager, mit der mindestens einen Eingangsschnittstelle und der mindestens einen Ausgangsschnittstelle verbunden ist und ausgelegt ist für das Übertragen eines registrierten eingehenden Stroms von der Eingangsschnittstelle auf die Ausgangsschnittstelle, welche den Verbrauch des registrierten eingehenden Stroms anfordert.

2. WebRTC Medienserver nach einem beliebigen der vorhergehenden Ansprüche, wobei der Prozessor mit einem Decoder kooperiert, der bereitgestellt wird zum Decodieren eines eingehenden Medienstroms.

3. WebRTC Medienserver nach einem beliebigen der vorhergehenden Ansprüche, wobei der Prozessor mit einem Encoder kooperiert zum Codieren eines übertragenen Medienstroms.

4. WebRTC Medienserver nach einem beliebigen der vorhergehenden Ansprüche, wobei jeder Medienstrom aufgebaut wird über eine Kombination einer Peer-Verbindung und eines WebSocket.

5. WebRTC Medienserver nach einem beliebigen der vorhergehenden Ansprüche, wobei jeder Medienstrom umfasst mindestens einen Audio- und einen Videoabschnitt.

6. WebRTC Medienserver nach einem beliebigen der vorhergehenden Ansprüche, wobei der Prozessor ausgelegt ist für die Echtzeit-Größeneinstellung des übertragenen Medienstroms.

7. Verfahren für den Aufbau eines Medienstroms zwischen ersten WebRTC Agenten und zweiten WebRTC Agenten über einen WebRTC Medienserver nach einem beliebigen der vorhergehenden Ansprüche, wobei das Verfahren die folgenden Schritte umfasst:
- Aufbau einer WebRTC Verbindung zwischen den ersten WebRTC Agenten und dem WebRTC Medienserver;
**dadurch gekennzeichnet, dass** das Verfahren weiterhin umfasst:
- die ersten WebRTC Agenten veröffentlichen einen Medienstrom durch Registrieren der Medienstrominformation an dem WebRTC Medienserver;
- Aufbau eines Medienstroms, entsprechend der Medienstrominformation, von den ersten WebRTC Agenten zum WebRTC Medienserver, wobei der Medienstrom ein Echtzeit-Multimediastrom ist;
- Aufbau einer weiteren WebRTC Verbindung zwischen den zweiten WebRTC Agenten und dem WebRTC Medienserver;
- die zweiten WebRTC Agenten Fordern den Konsum besagten registrierten Medienstroms beim WebRTC Medienserver an; und
- Übertragen besagten registrierten Medienstroms von besagtem WebRTC Medienserver auf besagte zweite WebRTC Agenten.

8. Verfahren nach Anspruch 7, wobei der
WebRTC Medienserver einen Prozessor umfasst, und wobei das
Verfahren weiterhin umfasst, in dem WebRTC Medienserver, mindestens einen der folgenden Schritte:
- Decodieren des übertragenen Medienstroms;
- Codieren des übertragenen Medienstroms; und
- Größeneinstellung des übertragenen Medienstroms.

9. Verfahren nach einem beliebigen der Ansprüche 7-8, wobei der Schritt des Veröffentlichens umfasst das Speichern besagter Medienstrominformation in einem Stream-Manager.

10. Verfahren nach einem beliebigen der Ansprüche 7-9, wobei der Schritt des Anforderns des Konsums umfasst das Speichern von Information hinsichtlich des angeforderten Medienstroms in einem Stream-Manager.

11. Verfahren nach einem beliebigen der Ansprüche 7-10, wobei der Schritt des Übertragens umfasst das Überprüfen eines Stream-Managers hinsichtlich eines angeforderten Stroms, der dem veröffentlichten Strom entspricht, und Übertragen des veröffentlichten Stroms auf die zweiten WebRTC Agenten, welche den Strom anfordern.

## Revendications

1. Serveur multimédia WebRTC comprenant :
- au moins une interface d'entrée sous forme d'agent WebRTC et adaptée pour recevoir, par l'intermédiaire d'une connexion WebRTC, un flux multimédia respectif à partir d'une application de client Web respective qui est un premier agent WebRTC ;
- au moins une interface de sortie sous forme d'agent WebRTC et adaptée pour transmettre, par l'intermédiaire d'une autre connexion WebRTC, un flux multimédia demandé respectif à une autre application de client Web respective qui est un second agent WebRTC ;
**caractérisé en ce que** le serveur multimédia WebRTC comprend en outre :
- un gestionnaire de flux adapté pour stocker des informations concernant des flux multimédia, les flux multimédia étant des flux multimédia en temps réel ;
- un contrôleur connecté à l'au moins une interface d'entrée et à l'au moins une interface de sortie, le contrôleur étant adapté pour enregistrer des flux entrants, reçus par l'intermédiaire de l'au moins une interface d'entrée, dans le gestionnaire de flux, et adapté pour enregistrer des demandes de consommation de flux multimédia, demandés par l'intermédiaire de l'au moins une interface de sortie, dans le gestionnaire de flux ;
- un processeur connecté au gestionnaire de flux, à l'au moins une interface d'entrée et à l'au moins une interface de sortie et adapté pour transférer un flux entrant enregistré à partir de l'interface d'entrée vers l'interface de sortie demandant à consommer le flux entrant enregistré.

2. Serveur multimédia WebRTC selon l'une quelconque des revendications précédentes, dans lequel le processeur coopère avec un décodeur permettant de décoder un flux multimédia entrant.

3. Serveur multimédia WebRTC selon l'une quelconque des revendications précédentes, dans lequel le processeur coopère avec un codeur permettant de coder un flux multimédia transmis.

4. Serveur multimédia WebRTC selon l'une quelconque des revendications précédentes, dans lequel chaque flux multimédia est établi par l'intermédiaire d'une combinaison d'une connexion homologue et d'une connexion WebSocket.

5. Serveur multimédia WebRTC selon l'une quelconque des revendications précédentes, dans lequel chaque flux multimédia comprend au moins une section audio et une section vidéo.

6. Serveur multimédia WebRTC selon l'une quelconque des revendications précédentes, dans lequel le processeur est adapté pour le redimensionnement en temps réel du flux multimédia transféré.

7. Procédé d'établissement d'un flux multimédia entre des premiers agents WebRTC et des seconds agents WebRTC par l'intermédiaire d'un serveur multimédia WebRTC selon l'une quelconque des revendications précédentes, le procédé comprenant les étapes suivantes :
- établir une connexion WebRTC entre les premiers agents WebRTC et le serveur multimédia WebRTC ;
**caractérisé en ce que** le procédé comprend en outre les étapes suivantes :
- les premiers agents WebRTC publient un flux multimédia en enregistrant les informations de flux multimédia au niveau du serveur multimédia WebRTC ;
- établir un flux multimédia, correspondant aux informations de flux multimédia, entre les premiers agents WebRTC et le serveur multimédia WebRTC, le flux multimédia étant un flux multimédia en temps réel ;
- -établir une autre connexion WebRTC entre les seconds agents WebRTC et le serveur multimédia WebRTC ;
- les seconds agents WebRTC demandent à consommer ledit flux multimédia enregistré au serveur multimédia WebRTC ; et
- transmettre ledit flux multimédia enregistré depuis ledit serveur multimédia WebRTC vers lesdits seconds agents WebRTC.

8. Procédé selon la revendication 7, dans lequel le serveur multimédia WebRTC comprend un processeur, et le procédé comprenant en outre, dans le serveur multimédia WebRTC, au moins une des étapes suivantes :
- décoder le flux multimédia transféré ;
- coder le flux multimédia transféré ; et
- redimensionner le flux multimédia transféré.

9. Procédé selon l'une quelconque des revendications 7 à 8, dans lequel l'étape de publication comprend le stockage dans un gestionnaire de flux desdites informations de flux multimédia.

10. Procédé selon l'une quelconque des revendications 7 à 9, dans lequel l'étape de demande de consommation comprend le stockage dans un gestionnaire de flux d'informations relatives au flux multimédia demandé.

11. Procédé selon l'une quelconque des revendications 7 à 10, dans lequel l'étape de transmission comprend la vérification d'un gestionnaire de flux pour un flux demandé qui correspond à un flux publié, et la transmission du flux publié vers les seconds agents WebRTC demandant le flux.
